**Europäisches Patentamt**

**European Patent Office**

**Office européen des brevets**

(19)

(11) Veröffentlichungsnummer : **0 365 566 B1**

(12) **EUROPÄISCHE PATENTSCHRIFT**

(45) Veröffentlichungstag der Patentschrift :
**11.09.91 Patentblatt 91/37**

(51) Int. Cl.$^5$ : **B01D 53/34**

(21) Anmeldenummer : **88905681.8**

(22) Anmeldetag : **05.07.88**

(86) Internationale Anmeldenummer :
**PCT/DE88/00412**

(87) Internationale Veröffentlichungsnummer :
**WO 89/00449 26.01.89 Gazette 89/03**

(54) **VERFAHREN ZUM ENTFERNEN VON STICKOXIDEN AUS RAUCHGASEN.**

(30) Priorität : **09.07.87 CH 2608/87**

(43) Veröffentlichungstag der Anmeldung :
**02.05.90 Patentblatt 90/18**

(45) Bekanntmachung des Hinweises auf die
Patenterteilung :
**11.09.91 Patentblatt 91/37**

(84) Benannte Vertragsstaaten :
**AT BE DE FR GB IT NL SE**

(56) Entgegenhaltungen :
**EP-A- 0 008 488**
**EP-A- 0 026 418**
**FR-A- 2 333 560**

(73) Patentinhaber : **Curtius, Friedrich, Dipl.-Ing.**
**Schachener strasse 72**
**W-8990 Lindau (DE)**

(72) Erfinder : **Curtius, Friedrich, Dipl.-Ing.**
**Schachener strasse 72**
**W-8990 Lindau (DE)**

(74) Vertreter : **Patentanwälte Dipl.-Ing. E. Eisele**
**Dr.-Ing. H. Otten**
**Seestrasse 42**
**W-7980 Ravensburg (DE)**

## Beschreibung

Die Erfindung betrifft ein Verfahren zum Entfernen von Stickoxiden (NOx) aus Rauchgasen nach dem Oberbegriff des Anspruch 1.

Zum kombinierten Entfernen von Schwefeldioxiden (SO$_2$) und Stickoxiden (NOx) ist ein Mehrstufenverfahren bekannt (DE-A-3436699) in dessen ersten Stufen Schwefeldioxid mit Hilfe von Schwefelsäure (H$_2$SO$_4$) und Wasserstoffperoxid (H$_2$O$_2$) ausgewaschen wird, während in der letzten Stufe Stickoxide mit Salpetersäure (HNO$_3$) und H$_2$O$_2$ entfernt werden. Es sind auch Verfahren bekannt, bei denen für die alleinige Entfernung von Stickoxiden mit HNO$_3$/H$_2$O$_2$-Gemischen gearbeitet wird. Mit diesen bekannten Verfahren sind die heute geforderten Reinheitsgrade — von beispielweise NOx 70 mg/Nm3 — nicht zu erreichen.

Im Ullmann, Aufgabe 1964. Bd. 15 ist die Handhabung von Salpetersäure ausführlich beschreiben. Auf Seite 22 ist die Absorptionsgleichung für NO$_2$ mit H$_2$O aufgestellt. Die Reaktion wird mit den möglichen Teilreaktion als vergleichsweise schnell beschrieben. Ändert man beispielsweise durch Verdampfen von HNO$_3$ mittels Wärmezufuhr das Gleichgewicht, so laufen die Reaktionen in die andere Richtung (Desorption) und man erhält die Gleichung für die Oxydation. Sie ist weiter unten mit (1) bezeichnet.

Eine weitere Beschreibung der Reaktionen ist in der DE-B-2436363 von Ugine Kuhlmann, Paris. Hier wird ein höherer NOx-Restgehalt von 400 mg/Nm3 angestrebt. Während bei Heizwerken und/oder Müllverbrennungen 70 mg/Nm3 und weniger gefordert werden. Die Oxidation von NO mit HNO$_3$ wie sie auf Spalte 4, Zeile 3-30 beschrieben ist, hat zumindest für die bei 40-50°C mit Wasserdampf gesättigten Rauchgase den Nachteil, daß der Partialdruck des Wassers über der verdünnten Salpetersäure niedriger ist als der Partialdruck des Wasserdampfes im zugeführten Rauchgas.

Bei einer Gleichgewichtstemperatur von 40°C beträgt der Unterschied zwischen den Partialdrücken von Wasserdampf im gesättigten Gas und über einer 20%-igen HNO$_3$-Lösung bereits 7,8 mmHg. Dagegen ist der Partialdruck von HNO$_3$ über ihrer 20%-igen Lösung nur kleiner 0,07 mmHg, d.h. ca 1/100 der Druckdifferenz des Wasserdampfes. Somit hat für den gewünschten Einsatzfall das Verfahren von Kuhlmann den Nachteil, daß durch das größere treibende Gefälle des Wasserdampfes — vom Gas in die Flüssigkeit —, der Stofftransport des Wasserdampfes vom Rauchgas in die Säure gegenüber des Verdampfung von HNO$_3$ aus des Säure um merh als das zehnfache Überwiegt. Dazu wird die Wasserdampfkondensation die örtlich beginnende HNO$_3$-Verdampfung durch einen Verdünnungseffekt des Säure zunächst unterbinden.

Aus der weiterhin bekannten Druckschrift DE-A-2654234 ist ein Verfahren zum Entfernen von Stickoxiden aus Rauchgasen nach dem Oberbegriff des Anspruchs 1 bekannt geworden. Nachteilig hieran ist, daß der Oxydationsprozeß in der ersten Stufe hohe Salpeterkonzentrationen benötigt und damit stets ein Verbrauch an teurer, hochkonzentrierter Salpetersäure vorliegt. Nachteilig ist ferner, daß aus der Absorptionsstufe dampfförmige Salpetersäure ausgetragen wird.

Der Erfindung liegt die Aufgabe zugrunde, die Nachteile der vorgenannten Verfahren zu vermeiden und insbesondere ein Verfahren zum Entferner von Stichoxiden aus Rauchgasen vorzuschlagen, welches den heute geforderten Reinheitsanforderungen entspricht. Aufgabe der Erfindung ist es weiterhin, hinsichtlich der Flüssigkeitskreisläufe und der Entsorgung der Flüssigkeiten die aus der Wäsche mit H$_2$O, HNO$_3$ und H$_2$O$_2$ enstehende Salpetersäure in solcher Qualität zu erzeugen, daß sie als Wertstoff wiederverwendet werden kann. Dabei sollen die anderen verunreinigten und/oder verdünnten Abschlemmungen aus den einzelnen Waschstufen in den vorgeschalteten Prozeßstufen entsorgt bzw. einer weiteren Verwendung zugeführt werden.

Diese Aufgabe wird ausgehend von einem Verfahren nach dem Oberbegriff des Anspruchs 1 durch die kennzeichnenden Merkmale des Anspruchs 1 gelöst.

Die Unteransprüche enthalten vorteilhafte und zweckmäßige Weiterbildungen des erfindungen des erfindungsgemäße Verfahrens nach Anspruch 1.

Gemäß der Erfindung werden die im Stand der Technik enthaltenen Nachteile vermieden und das vorgereinigte, gesättigte Rauchgas und als Folge auch das Behandlungsmedium HNO$_3$ soweit aufgeheizt, daß der Ünterschied der Partialdrücke des Wasserdampfes im Rauchgas und über der HNO$_3$-Lösung ausgeglichen wird. Dabei wird die Rauchgasenthalpie soweit über der des gesättigten Rauchgases angeordnet, daß auch die HNO$_3$ mit dem zugehörigen Wasseranteil verdampfen kann, um die Säurekonzentration im Wäscher konstant zu halten. Hierdurch wird ermöglich, daß nur ein Stofftransport von der Flüssigkeit in das Gas entsteht.

Bekanntlich liegen die NOx im Rauchgas zum weitaus Überwiegenden Teil (mehr als 95%) als NO vor. Wie Versuche ergeben haben, ist eine Abscheidung von NOx aus der Gasphase heraus über zwei an sich bekannte Reaktionswege erfolgreich möglich. Der eine Weg (A) erfordert in der Gasphase eine vollständige Oxidation von NO zu NO$_2$, das im Gleigewicht mit seinem Dimer N$_2$O$_4$ steht ; dieses reagiert in der flüssigen Phase mit Wasser (H$_2$O) zu HNO$_3$ und salpetriger Säure (HNO$_2$).

Bei dem zweiten Reaktionsablauf (B) ist es lediglich notwendig, einen Bruchteil des NO zu NO$_2$ in der Gas-

phase zu oxidieren. Liegen beide Komponenten im Mol-Verhältnis 1 : 1 vor, so stellt sich in der Gasphase ein Gleichgewicht mit $N_2O_3$ ein, das in der flüssigen Phase zunächst zu $HNO_2$ und bei Anwesenheit von $H_2O_2$ zu $HNO_3$ und $H_2O$ weiter reagiert.

Vorteilhaft ist es dabei, die $HNO_3$-Dampfmenge in der ersten Stufe in Abhängigkeit von NO- bzw. NOx-Konzentrationen in den zu reinigenden Rauchgasen einzustellen.

Da eine Oxidation von NO zu $NO_2$ in der Gasphase bei Vorhandensein von $HNO_3$- und $H_2O$-Dampf nach der Reastionsgleichung

$$NO + 2HNO_3 \rightarrow 3NO_2 + H_2O \quad (1)$$

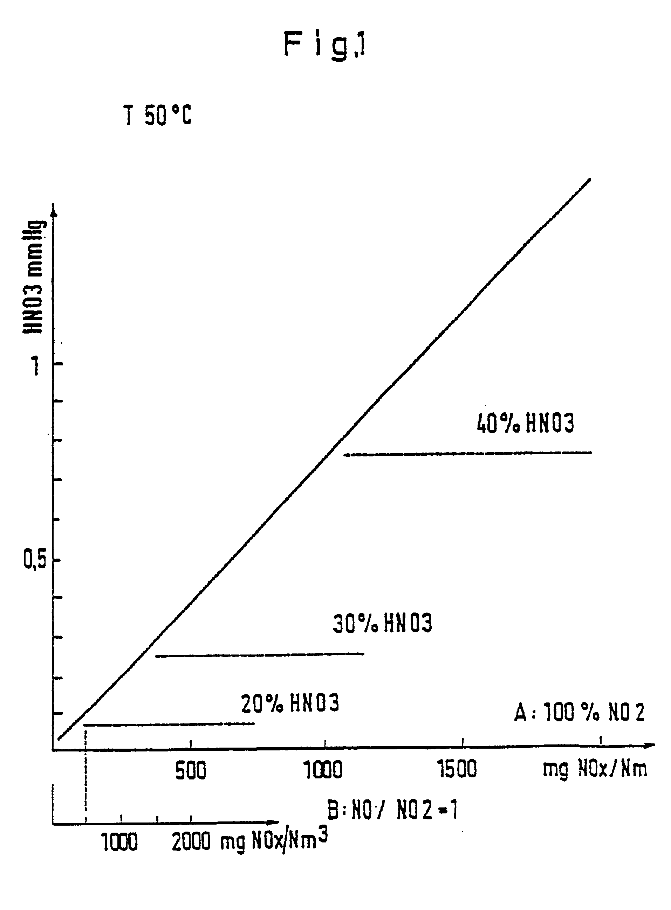

abläuft, ist für den vorstehend als zweiten Reaktionsweg B (Fig. 1) geschilderten Ablauf erforderlich, 1/4 der in den Rauchgasen vorhandenen NO-Konzentrationen zu oxidieren. Daraus folgt, daß es vorteilhaft ist, wenn die $HNO_3$-Dampfmenge in der ersten Stufe so eingestellt wird, daß in dieser Stufe ein NO/$NO_2$-Gemisch im Verhältnis 1 : 1 erzeugt wird. Denn für Weg B ist, wie später noch im Zusammenhang mit Fig. 1 beschrieben wird, die für die Oxidationsreaktion erforderliche $HNO_3$-Dampfmenge und damit der zugehörige $HNO_3$-Dampf-druck in der Gasphase stark reduziert. Es sind daher ein geringerer Energieaufwand für die $HNO_3$-Dampfge-winnung und gegebenenfalls kleinere $HNO_3$-Konzentrationen insbesondere in der Waschflüssigkeit der ersten oder Oxidationsstufe erforderlich.

Für eine erfolgreiche Entfernung von NO aus den Rauchgasen ist es also erforderlich, das NO zumindest teilweise zu $NO_2$ zu oxidieren. Dies geschieht in der Gasphage der ersten Stufe des neuen Verfahrens nach der vorstehenden Reaktionsgleichung (1).

Der erforderliche $HNO_3$-Dampf kann dabei mit Vorteil ganz oder teilweise direkt als Dampf vor oder in die erste Stufe eingespeist werden, wobei er entweder in einer externen Verdampfungsanlage erzeugt oder in der Form von damit angereicherten Rauchgasen aus der zweiten Stufe in die erste Stufe zurückgeführt werden kann. Erfolgt die Bereitstellung von $HNO_3$-Dampf vollständig durch direkte Einspeisung des $HNO_3$-Dampfes in die Rauchgase, so kann die für das Verfahren notwendige Anlage dahingehend vereinfacht werden, daß die erste Stufe als einfache Verweilzeitstrecke aufgebaut ist.

Ünabhängig von der Art der nachfolgenden $HNO_3$-Dampfbehandlung ist es immer vorteilhaft, die gesättigten Rauchgase entweder indirekt über einen Wärmeaustauscher oder durch Beimischen eines trockenen, heißeren Gases z.B. Luft zunächst um 3-6°C zu erwärmen.

Eine andere Möglichkeit für die Erzeugung des erforderlichen $HNO_3$ Dampfes besteht darin, die erste Stufe als Waschstufe mit $HNO_3$ als Waschflüssigkeit auszubilde, und eine Verdampfung von $HNO_3$ aus dieser Waschflüssigkeit durch Zufuhr einer Wärmemenge in oder vor der ersten Stufe zu bewerkstelligen. Diese Wärme kann dabei sowohl den Rauchgasen direkt als auch — über einem Wärmetauscher — der in der ersten Stufe zirkulierenden Waschflüssigkeit zugegeben werden.

Unter Ümständen kann es zweckmäßig sein, der Waschflüssigkeit bereits in der ersten Stufe $H_2O_2$ zuzu-geben, um einen Teil des gebildeten $NO_2$ nach der Reaktionsgleichung

$$2NO_2 + H_2O_2 \rightarrow 2\,HNO_3 \quad (2)$$

in Salpetersäure umzuwandeln und somit aus den Rauchgasen "auszuwaschen" ; darüberhinaus können mit dem $H_2O_2$, das in Form einer 60%-igen Lösung — alle Prozentangaben beziehen sich auf Gew.-% — zugege-ben wird, Restschadstoffe wie $SO_2$ in die Wachflüsigkeit der ersten Stufe eingebunden werden. In dieser wie auch in der nachfolgend beschriebenen zweiten Stufe ist auch der Einsatz einer handelsüblichen $H_2O_2$-Lösung mit 30-35% möglich.

Die als andere Möglichkeit beschrieben erste Waschstufe bringt gegenüber der dampfförmigen Aufgabe von $HNO_3$ in das Rauchgas den Vorteil, daß in dieser Stufe Restschadstoffe aus den Rauchgasen ausgewaschen werden.

Eine weitere Verschmutzung der nachfolgenden Stufen auf der Gasseite und/oder in der Flüssigkeit mit HCl und/oder $SO_2$/$SO_3$ und festen Verunreinigungen kann dadurch weitgehendst vermieden werden.

Entsprechend ist die dampfförmige $HNO_3$-Aufgabe beim Einsatz hinter Erdgasfeuerungen möglich, da hierbei keine für die Säurequalität schädlichen Verschmutzungen im Rauchgas vorhanden sind.

Im wesentlichen erfolgt das Auswaschen der NOx jedoch in der zweiten Stufe des Verfahrens unter Zugabe von $H_2O_2$, das ebenfalls als etwa 60%-ige wäßrige Lösung in die in der zweiten Stufe als Waschflüssigkeit zir-kulierende $HNO_3$ eingespeist wird, wobei die in die zweite Stufe eingespeisten $H_2O_2$-Mengen entsprechend der NOx-Konzentrationen in den Rauchgasen an Eingang der ersten und/oder der zweiten Stufe eingestellt werden und wobei ferner die $HNO_3$-Konzentration in der zweiten Stufe durch Zugabe von Waschflüssigkeit aus der dritten Stufe oder von Frischwasser entsprechend den NOx-Konzentrationen und den eingespeisten $H_2O_2$-

Mengen geregelt wird.

Ein Teil des gebildeten $HNO_3$ liegt entsprechend dem Partialdruck in der Flüssigkeit als Dampf vor und kann somit mit den gereinigten Rauchgasen entweichen. Die von den Rauchgasen aus der zweiten Stufe mitgeführten $HNO_3$-Mengen lassen sich reduzieren, wenn die NOx-Auswaschung in der zweiten Stufe in mindestens zwei Teilstufen durchgeführt wird ; dabei hat es sich als günstig erwiesen, $H_2O_2$ in die Waschflüssigkeiten aller Teilstufen einzudosieren, wobei die zugegebenen $H_2O_2$-Mengen derart aufgeteilt werden, daß in der letzten Teilstufe eine vorgewählte maximale $HNO_3$-Konzentration der Waschflüssigkeit nicht überschritten wird.

Wie im Ullmann beschrieben, ist die Wärmetönung der Abscheidereaktionen positiv, d.h. es ist ein Wärmeüberschuß vorhanden. Bei höheren NOx-Eingangskonzentrationen kann diese Wärme über Kühlregister in den Flüssigkeitskreisläufen abgeführt werden.

In der dritten Stufe schließlich werden die Rauchgase von dem aus der zweiten Stufe mitgerissenen $HNO_3$-Dampf gereinigt. Zur Erniedrigung des $HNO_3$-Dampfdruckes und damit für eine verstärkte Kondensation von $HNO_3$ in der, in der dritten Stufe zikulierenden Waschflüssigkeit, ist es sinnvoll, wenn die Waschflüssigkeit der dritten Stufe in einem Kühler gekühlt wird, wobei die Kühlleistung in der dritten Stufe in Abhängigkeit von der zulässigen Höchstkonzentration an $HNO_3$ in dem gerinigten Rauchgas geregelt werden kann.

Die bei dem neuen Verfahren erzeugte überschüssige $HNO_3$ läßt sich mit Vorteil als Waschflüssigkeit einem dem Verfahren vorgelagerten Prozeß der Rauchgasreinigung zuführen.

Im folgenden wird die Erfindung anhand von Ausführungsbeispielen im Zusammenhang mit der Zeichnung näher erläutert.

Fig. 1    zeigt in einem Diagramm den für eine vollständige No-Oxidation in der ersten Stufe erforderlichen $HNO_3$-Dampfdruck im Abhängigkeit von der NOx-Menge in den Rauchgasen ;

Fig. 2    gibt ein Anlagenschema zur Durchführung des neuen Verfahrens wieder, während

Fig. 3    eine abgewandelte erste Stufe darstellt.

In dem Diagramm der Fig. 1 ist als Abszisse die NOx-Menge in $mg/Nm^3$ aufgetragen ; die Ordinate gibt in mmHg den HNO-Dampfdruck für eine vollständige Oxidation des NO zu $NO_2$ wieder. Als Parameter sind Waschflüssigkeiten mit den unterschiedlichen, notwendigen $HNO_3$-Konzentrationen angegeben, da der Dampfdruck nicht nur temperaturabhängig, sondern — in Konkurrenz mit dem $H_2O$-Dampfdruck — auch noch abhängig von der Konzentration der damit im Gleichgewicht stehenden Flüssigphase ist. Die in Fig. 1 weit ausgezogene Abszisse ist für den beschriebenen Reaktionsmechanismus A gültig, bei dem NO vollständig in $NO_2$ oxidiert wird, während der auf 1/4 verkürzte Abszissenabschnitt für den beschriebenen Weg B gilt, bei dem $NO/NO_2$ im Verhältnis 1 : 1 vorliegen.

In der Praxis liegt der Betriebspunkt zwischen den möglichen Wegen unter A und B. Ein Vollastbetrieb, der für die Bedingungen unter B eingestellt ist, arbeitet bei reduzierten Gasdurchsätzen d.h. Teillast, mit längeren Reaktionszeiten. Dadurch wird relativ mehr NO oxidiert, sodaß sich die Bedingungen bei Lastschwankungen in Richtung A verschieben.

Das Diagramm der Fig. 1 ist berechnet für Waschflüssigkeitstemperaturen von 50°C. Der Zusammenhang zwischen $HNO_3$-Dampfdruck und NOx-Menge ist zwar temperaturunabhängig, jedoch gelten die eingetragenen $HNO_3$-Konzentrationen der Waschflüssigkeiten nur für die angegebene Temperaturvon 50°C. Für ein höhere Temperatur steigt der $HNO_3$-Partialdruck über der Flüssigkeit an, so daß die Konzentrationen der benötigten Waschflüssigkeiten erniedrigt werden können.

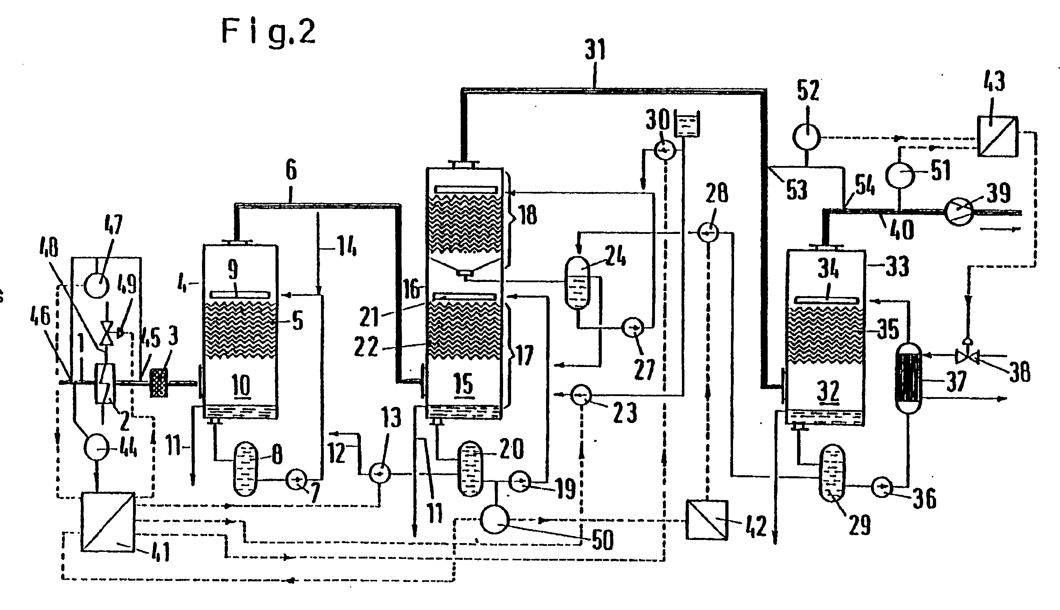

Die von $H_2O_2$-schädigenden und/oder korrosiven Schadstoffen befreiten, jedoch NOx- und $H_2O$-Dampfhaltigen Rauchgase einer nicht weiter dargestellten Rauchgasreinigung fließen dem dem Ausscheiden von NOx dienenden Anlagenteil über eine Leitung 1 (Fig. 2) zu, in der ein Wärmetauscher 2 für einen Temperaturausgleich in den strömenden Rauchgasen und eine mit statischen Mischern z.B. Sulzer Gasmischer Typ SMV, bestückte Mischstrecke 3 vorgesehen sind. Die Leitung 1 mündet in einen Reaktor 4, in dem die erste Stufe des Reinigungsverfahrens, die mindestens teilweise Aufoxidation von NO zu $NO_2$, durchgeführt wird.

Die Rauchgase durchsetzen im Reaktor 4 von unten nach oben eine weitere Mischstrecke 5, die als Austauschkörper, z.B. Sulzer Packung Typ Mellapak 250 Y — PP oder 316 L — ausgeführt ist. Die Gase verlassen den Reaktor durch eine Leitung 6. Ihnen entgegenströmt durch den Mischer/Packung 5 als Waschflüssigkeit in einem stufeninternen Kreislauf eine wäßrige $HNO_3$-Lösung, die eine Konzentration von etwa 15% $HNO_3$ hat. Die $HNO_3$-Lösung wird von einer Pumpe 7 aus einem Behälter 8 über einen Verteiler 9 und den Mischer 5 in den Bodenraum 10 des Reaktors 4 gefördert. Im Raum 10, in den auch die Rauchgase eingeleitet werden, ist durch die herabfließende Säure eine freie Oberfläche an $HNO_3$-Lösung vorhanden, aus der entsprechen der Temperatur bereits eine bestimmte $HNO_3$-Menge zusammen mit $H_2O$-Dampf in die Gasphase übergeht, um mit den NO der Rauchgase zu reagieren. Der eigentliche Stoffaustausch, $HNO_3$- und $H_2O$-Verdampfung, erfolgt aber beim Eintritt der Rauchgase in die Packung 5. Überschüssige $HNO_3$-Lösung kann aus dem Raum 10 durch

EP 0 365 566 B1

eine Leitung 11 abgezogen werden, während über eine Leitung 12, in der eine Pumpe 13 vorgesehen ist, höher konzentrierte $HNO_3$ aus der zweiten Stufe nachgespeist wird, da bei der oxidation in der ersten Stufe laufend $HNO_3$ verbraucht wird.

Durch den Behälter 8, der während des Betriebes überflutet ist — und ebenso durch die Behälter 20, 24, und 29 in den übrigen Kreisläufen von Waschflüssigkeiten — kann die Flüssigkeitsmenge in den einzelnen Kreisläufen gering gehalten werden, da die Durchmesser der Behälter gegenüber denjenigen der zugehörigen Reaktoren 4, 16 und 33 klein sind. Damit wird die Verweilzeit der Waschflüssigkeiten in den Kreisläufen relativ kurz ; dies ist insofern vorteilhaft, damit die Verluste an $H_2O_2$, das nicht beständig ist und sich zersetzt, gering gehalten werden.

Weiterhin ist es möglich, über eine Leitung 14 der in der ersten Stufe zirkulierenden Waschflüssigkeit $H_2O_2$ in Form einer 60%-igen wässrigen Lösung zuzugeben, um bereits in dieser Stufe einen Teil des geschilderten $NO_2$ nach der früher angegebenen Gleichung (2) auszuwaschen. Die Zugabe von $H_2O_2$ in den Waschkreislauf der ersten Stufe bewirkt darüberhinaus zusätzlich die Einbindung von Restschadstoffen, wie z.B. $SO_2$ oder HCl, in die Waschflüssigkeit der ersten Stufe.

Die verschiedenen "Steuer"-Eingriffe in die erste Stufe werden später im Zusammenhang mit weiteren derartigen Eingriffen in die folgenden Stufen beschrieben.

Die Leitung 6 verbindet den Kopfraum des Reaktors 4 mit dem Bodenraum 15 des Reaktors 16 der zweiten Stufe, die als eigentliche Waschstufe für das Auswaschen von $NO_2$ entsprechen Gleichung (2) dient.

Der Reaktor 16 ist in zwei Teilstufen 17 und 18 aufgeteilt, in denen als Waschflüssgkeiten $HNO_3$-Lösungen unterschiedlicher Konzentrationen zirkulieren. In der unteren Stufe 17 fördert eine Pumpe 19 eine etwa 20%- bis 40%-ige $HNO_3$-Lösung aus dem Behälter 20 über den Verteiler 21 und den Mischer/Austauschkörper 22 in den Hohlraum 15 und zurück in den Behälter 20. Mit Hilfe einer Pumpe 23 wird der Waschflüssigkeit der unteren Stufe 17 $H_2O_2$-Lösung in der bereits erwähnten Form zugesetzt. Weiterhin wird aus dem Behälter 24 der oberen Teilstufe 18 $HNO_3$-Lösung, die eine geringere Konzentration von etwa 7% hat, in den Kreislauf der unteren Teilstufe 17 eingespeist.

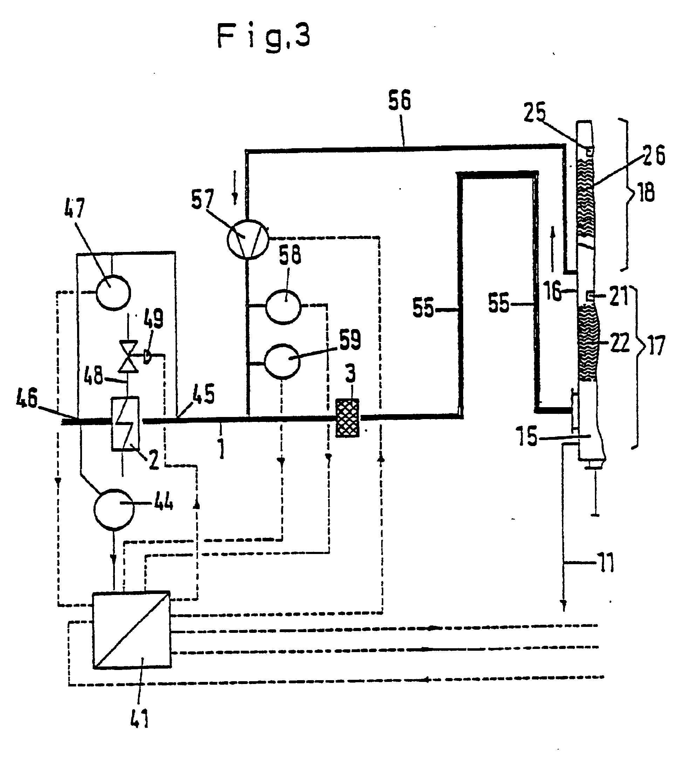

Im Aufbau ist die obere Teilstufe 18 identisch mit der unteren Teilstufe 17. Sie unterscheidet sich lediglich dadurch, daß die in ihr durch einen Verteiler 25 (s. Fig. 3) und einen Mischer/Packung 26 (s. Fig. 3) von einer Pumpe 27 geförderte Waschflüssigkeit eine geringere Konzentration als in der unteren Teilstufe 17 aufweist. Die Nachspeisung von $HNO_3$ in die obere Teilstufe 18 erfolgt durch eine Pumpe 28 aus einem Behälter 29 der dritten Stufe in den Behälter 24 der oberen Teilstufe 18. $H_2O_2$ wird der oberen Teilstufe 18 durch eine Pumpe 30 zudosiert.

Die "gewaschenen" Rauchgase, die mit $HNO_3$-Dampf durchsetzt sind, verlassen die Teilstufe 18 durch eine Leitung 31, um in den Bodenraum 32 eines Reaktors 33 der dritten Stufe eingespeist zu werden.

Die Aufteilung der zwei Teilstufen hat den Zweck, die $HNO_3$-Konzentration in der Waschflüssigkeit der letzten Teilstufe möglichst niedrig zu halten ; denn Temperatur und Konzentration dieser Waschflüssigkeit bestimmen den $HNO_3$-Dampfdruck und damit die Menge, die über die Leitung 31 mit den gewaschenen Rauchgasen mitgeführt wird. Um die Auswaschung des $HNO_3$-Dampfes in der dritten Stufe nicht zu stark zu belasten, wir die $HNO_3$-Konzentration in der letzten Teilstufe 18 der zweiten Stufe so geregelt, daß sie einen maximalen Grenzwert nicht überschreitet.

Selbstverständlich ist es auch möglich, die zweite Stufe insgesamt in mehr als zwei Teilstuifen 17 und 18 zu unterteilen.

Im dem Reaktor 33, der mit einem Verteiler 34 und einem Mischer 35 in seinem Aufbau den Reaktoren 4 und 16 entspricht, wird der $HNO_3$-Dampf durch Absorption und Kondensation aus den gereinigten Gasen entfernt. Um ein für die geforderte Reinheit des Reingases erforderliches Auskondensieren zu erreichen, ist im Waschflüssigkeitskreislauf der dritten Stufe, der neben dem Verteiler 34 und dem Mischer 35 noch eine Pumpe 36 und den Behälter 29 enthält, ein Kühler 37 vorgesehen, dessen Kühlmittelfluß mit Hilfe eines veränderlichen Drosselorganes 38 variiert werden kann.

Die $HNO_3$-Konzentration in der Waschflüssigkeit der dritten Stufe ist sehr gering und beträgt beispielsweise 0,5 bis 1%.

Wie aus der ersten Stufe zweigen auch aus den Bodenräumen 15 und 32 der zweiten und dritten Stufe Entsorgungsleitung 11 für überschüssige $HNO_3$-Lösung ab, wobei die überschüssigen Säuren aus der ersten und dritten Stufe in einen vorausgehenden Anlagenteil oder Verfahrensabschnitt der Rauchgasreinigung eingespeist werden, während die relativ hochkonzentrierte $HNO_3$-Lösung aus der zweiten Stufe als wertvolles Produkt, beispielsweise der Düngemittelherstellung, zugeführt werden kann.

Ein Gebläse 39 in einer Reingasleitung 40 am Kopf des Reaktors 33 fördert das Reingas aus der Anlage.

Für eine Steuerung der Anlage nach Fig. 1 sind drei Steueraggregate 41, 42 und 43 vorgesehen. Dem Gerät 41, das beispielsweise ein Prozessrechner ist, wird als Basisgröße für die ganze Steuerung die in die Anlage mit den Rauchgasen eintretende Schadstoffmende an NOx zugeführt. Um diese Schadstoffmenge zu

5

bestimmen, werden mit einem kombinierten Meßgerät 44 der Rauchgasstrom als Menge pro Zeiteinheit und seine NOx-Konzentration gemessen, die, wie bereits erwähnt, praktisch vollständig als NO gegeben ist ; die Konzentrationsmessung erfolgt nach einem bekannten Verfahren, beispielsweise unter Ausnutzung der Chemieluminiszenz-Effekten.

Weiterhin fließt dem Rechner 41 der Ist-Wert einer Temperatur-Differenz-Messung 47 der Rauchgastemperaturen an den Meßstellen 45 und 46 nach und vor dem Wärmetauscher 2 zu. Aus diesen beiden Meßwerten — Temperaturdifferenz und Schadstoffmenge — rechnet der Rechner 41 die notwendige $HNO_3$-Dampfmenge für die Oxidation aus und gleichzeitig, unter Berücksichtigung der bei einer Temperaturerhöhung ebenfalls stattfindenden $H_2O$-Verdampfung, die erforderliche Wärmemenge. Diese wird ausgedrückt in einem Sollwert für die Temperaturdifferenz an den Meßstellen 45 und 46. Aufgrund eines Sollwert/Istwert-Vergleiches wird ein steuerbares Drosselorgan 49 in der Zuführungsleitung 48 für ein Heizmedium, z.B. Dampf, zu dem Wärmetauscher 2 beeinflußt.

Über die Leitung 12 muß in der ersten Stufe verbrauchtes $HNO_3$ laufend ersetzt werden ; dem Rechner 41 werden daher als weiteres Eingangssignal die Meßwerte eine Konzentrationsmeßgerätes 50 zugeführt, mit dem die $HNO_3$-Konzentration im Waschkreislauf der zweiten Stufe ermittelt wird. Der Rechner errechnet mit den Meßwerten der Geräte 44 und 50 als Basis die aus der zweiten Stufe in die erste Stufe einzuspeisende Menge $HNO_3$-Lösung, die für die Aufrechterhaltung der notwendigen $HNO_3$-Konzentration in der ersten Stufe erforderlich ist. Das Ergebnis dieser Berechnung wird zur Drehzahlsteuerung der Dosierpumpe 13 genutzt.

Aufgrund der ermittelten NOx-Konzentration in den ankommenden Rauchgasen werden vom Rechner 41 weiterhin die in die Teilstufen 17 und 18 zu dosierenden $H_2O_2$-Mengen vorausberechnet und für die Steuerung der ebenfalls drehzahlgesteuerten Pumpen 23 und 30 verwendet. Diese beiden Pumpen sind im übrigen so ausgelegt und aufeinander abgestimmt, daß das Verhältnis der von ihnen geförderten $H_2O_2$-Menge immer konstant bleibt, unabhängig davon, wie groß die aufgrund der NOx-Konzentrationen ermittelte $H_2O_2$-Gesamtmenge ist.

Die aus der dritten Stufe in die obere Teilstufe 18 der zweiten Stufe eingespeiste Menge schwachkonzentrierter $HNO_3$-Lösung wird variiert von der Pumpe 28, deren Drehzahl von dem Steuergerät 42 gesteuert wird. Eingangsgrößen für das Gerät 42 sind die Meßwerte des Konzentrations-Meßgerätes 50, also die $HNO_3$-Konzentrationen der Waschflüssigkeit der unteren Teilstufe 17.

Ein weiterer Prozeßrechner 43 am Ende der Anlage überwacht und steuert die Konzentration an $HNO_3$-Dampf in dem die Anlage verlassenden Reingas. Als Eingangsgrößen werden dem Rechner 43 die $HNO_3$-Konzentrationen im Reingas, gemessen durch ein Meßgerät 51, und die Temperaturdifferenz der Gase am Eingang und Ausgang der dritten Stufe zugeleitet. Diese Temperaturdifferenz wird gebildet in einem Temperatur-Meßgerät 52, dem die an den Stellen 53 und 54 ermittelten Gastemperaturen zugeführt werden.

Aus diesen Eingangsgrößen bestimmt der Rechner 43 die geforderte Kühlleistung in der dritten Stufe und steuert diese durch Variieren des Kühlmittelstromes durch den Kühler 37 mit Hilfe des regelbaren Drosselorganes 38. Je höher die geforderte $HNO_3$-"Reinheit" der Rauchgase ist, umso größer muß die aufgebrachte Kühlleistung sein.

Bei der Variante nach Fig. 3 der Anlage nach Fig. 2 ist der Reaktor 4 der ersten Stufe ersetzt durch eine einfache Verweilzeitstrecke 55 für die Rauchgase. Durch diese wird der Strömungsweg der Rauchgase verlängert, um den Ablauf der Gasphasen-Oxidation gemäß Gleichung (1) vor dem Eintritt der Rauchgase in die zweite Stufe zu ermöglichen. Diese Vereinfachung ist zulässig, weil das für die Reaktionen benötigte, dampfförmige $HNO_3$ direkt als Dampf in die in die Anlage eintretenden Rauchgase eingespeist wird. Dieser Dampf wird der zweiten Stufe am Ende der ersten Teilstufe 17 entnommen und über eine Leitung 56, in der ein Gebläse 57 vorgesehen ist, in die Zuführleitung 1 für die Rauchgase eingeleitet, wobei bereits bis zum Ende der ersten Teilstrecke 17 teilbehandelten Rauchgase als Transportmittel für $HNO_3$-Dampf dienen.

Zur Bestimmung der von dem Gebläse 57 zu fördernden $HNO_3$-Dampfmenge werden dem Rechner 41 in diesem Fall neben den Meßwerten des Gerätes 44 in einem Gerät 58 gemessene Konzentrationswerte für die $HNO_3$-Konzentration in der Leitung 56 und Meßwerte für den Mengenstrom in dieser Leitung 56, der bei 59 gemessen wird, zugeleitet. Das Ausgangssignal des Rechners 41 für die $HNO_3$-Dampfmengen-Regelung steuert die Drehzahl des nicht dargestellten Antriebsmotors für das Gebläse 57.

Im dem folgenden Beispiel ist tabellarisch die Entstickung des Rauchgases einer Müllverbrennungsanlage als konkretes Beispiel für die Wirksamkeit des neuen Verfahrens wiedergegeben :

| | |
|---|---|
| Müllverbrennung ca | 9 to Müll/h |
| Rauchgasmenge (Rohgas) | 55.000 Nm3/h |
| Zustand nach der Naßwäsche | |
| Temperatur | 60 °C |
| SO2-Gehalt | 30 mg/Nm3 |
| HCl-Gehalt | 5 mg/Nm3 |
| Staubgehalt | 10 mg/Nm3 |
| NOx-Gehalt (als NO2) | 550 mg/Nm3 |
| | |
| Reingas nach NOx-Wäsche | 55.000 Nm3/h |
| Temperatur | 57 °C |
| NO2-Gehalt | 70 mg/Nm3 |

1. Stufe (Oxidationsstufe) — Desorption

| | |
|---|---|
| Wärmezufuhr zur Aufheizung | 100.000 kcal/h |
| Rauchgasaufheizung ca. | 6 °C * |
| Flüssigkeitskreislauf-HNO3 | 15 % |
| Flüssigkeitszufuhr HNO3-20%ig | 108 kg/h |
| Entsorgung HNO3-15% mit | 20 kg/h |
| H2SO4-10% | |

*) Anstelle der indirekten Wärmezufuhr im Apparat 2 ist
die Beimischung von heißer Luft möglich:

| | |
|---|---|
| Menge | 3.400 Nm3/h |
| Temperatur | 160 °C |

2. Stufe (2-stufige Waschstufe) — Absorption

| | | |
|---|---|---|
| untere Teilstufe | HNO3-Konzentration | 20 % |
| | HNO3-Menge Produktion | 150 kg/h |
| | H2O2-Bedarf (Basis: 100%) | 21,15 kg/h |
| obere Teilstufe | HNO3-Konzentration | 7 % |
| | H2O2-Bedarf (100%ig) | 8.1 kg/h |
| | Flüssigkeitsaufgabe | |
| | (0.3% HNO3) | 135 kg/h |
| H2O2-Menge gesamt (100%ig) | | 29,25 kg/h |
| Entsorgung HNO3-20 % - Wertstoff | | 150 kg/h |

7

3. Stufe (Kondensation-Wäsche) — Absorption

```
. H2O-Kondensation                    850 kg/h
  Reingastemperatur                    57 °C
  HNO3-Anteil                          0,3 %
  Entsorgung HNO3-0,3 %                715 kg/h
```

Entsorgung

```
  aus Oxidation (1. Stufe)             20  kg/h *
  HNO3-20 % aus Waschstufe (2.Stufe)
  als Wertstoff                       .150 kg/h **
  aus Kondensationswäsche (3. Stufe)   715 kg/h *

  *) Abschlämmung
 **) Wertstoff
```

20 kg und 715 kg Abschlämmung gehen in die vorgeschalteten, bereits vorhandenen Waschstufen ; dabei dient das $H_2O$ als Waschflüssigkeit und die $HNO_3$ als Oxidationsmittel für $SO_2$.

**Patentansprüche**

1. Verfahren zum Entfernen von Stickoxiden (Nox) aus Rauchgasen mit niedrigem NOx-Gehalt durch einen mehrstufigen Waschprozeß mit Salpetersäure ($HNO_3$)-Lösung unter Zugabe von Wasserstoffperoxid ($H_2O_2$), wobei die Rauchgase zuvor von $H_2O_2$-zersetzenden und/oder korrosiven Schadstoffen, wie beispielsweise Schwefeldioxid ($SO_2$), Chlorwasserstoff (HCl) oder Fluorwasserstoff (HF), sowie von Feststoffpartikeln befreit worden sind, wobei zur wenigstens teilweisen Oxidation von Stickstoffmonoxid (NO) zu Stickstoffdioxid ($NO_2$) die Rauchgase in einer ersten Stufe mit $HNO_3$-Dampf behandelt werden, wobei in einer zweiten Stufe $NO_2$ und-/oder ein $NO/NO_2$-Gemisch aus der ersten Stufe mit wäßriger $HNO_3$ unter Zugabe von $H_2O_2$ ausgewaschen werden, dadurch gekennzeichnet, daß zur Vermeidung von $H_2O$-Kondensation aus dem Rauchgas der ersten Stufe 10 Wärme zugeführt wird, daß bei höheren NOx-Gehalten im Rauchgas in der zweiten Stufe 15, 17, 18 zur Entsorgung der dort entstehenden, verdünnten Salpetersäure ($HNO_3$) diese zunächst in einem als Teilstufe vorgeschalteten Absorptionsprozeß 17 aufkonzentriert und dann abgezogen wird, und daß in einer dritten Stufe 32 zur Vermeidung von zusätzlichen Emissionen der in der zweiten Stufe im Rauchgas verbleibende Salpetersäure-($HNO_3$)-Dampf durch Wäsche mit verdünnter Salpetersäure ($HNO_3$) ausgewaschen wird.

2. Verfahren nach Anspruch 1, dadurch gekennzeichnet, daß die 1. Stufe als Waschstufe ausgeführt wird.

3. Verfahren nach Anspruch 1 bis 2, dadurch gekennzeichnet, daß ein Teilstrom der in der zweiten Stufe 15 erzeugten Säure in die erste Stufe 10 geführt und durch Zufuhr von Wärme eingedampft wird.

4. Verfahren nach Anspruch 1, dadurch gekennzeichnet, daß $HNO_3$ direkt als Dampf vor oder in die erste Stufe eingespeist wird.

5. Verfahren nach Anspruch 4, dadurch gekennzeichnet, daß mit $HNO_3$-Dampf angereicherte Rauchgase aus der zweiten Stufe in oder vor die erste Stufe zurückgeführt werden.

6. Verfahren nach einem der Ansprüche 1 bis 5, dadurch gekennzeichnet, daß der als Waschflüssigkeit in der ersten Stufe zirkulierenden $HNO_3$-Lösung eine zur mindestens teilweisen Bereitstellung der erforderlichen $HNO_3$-Dampfmenge notwendige Wärmemenge zugeführt wird.

7. Verfahren nach Anspruch 1, dadurch gekennzeichnet, daß die $HNO_3$-Dampfmenge in der ersten Stufe in Abhängigkeit von der NO- bzw. der NOx-Konzentration in den zu reinigenden Rauchgasen eingestellt wird.

8. Verfahren nach Anspruch 7, dadurch gekennzeichnet, daß die $HNO_3$-Dampfmenge in der ersten Stufe so eingestellt wird, daß in dieser Stufe als $NO/NO_2$-Gemisch im Verhältnis 1 : 1 erzeugt wird.

9. Verfahren nach Anspruch 4 und 5, dadurch gekennzeichnet, daß die erste Stufe als einfache Verweilzeitstrecke aufgebaut ist.

10. Verfahren nach einem der Ansprüche 1 bis 8, dadurch gekennzeichnet, daß der Waschflüssigkeit bereits in der ersten Stufe $H_2O_2$ zugegeben wird.

11. Verfahren nach Anspruch 1, dadurch gekennzeichnet, daß die in die zweite Stufe eingespeisten $H_2O_2$-Mengen entsprechend dur NOx-Konzentration in den Rauchgasen am Eingang der ersten und/oder der zweiten Stufe eingestellt werden, und daß ferner die $HNO_3$-Konzentration in der zweiten Stufe durch Zugabe von Waschflüssigkeit aus der dritten Stufe oder von Frischwasser entsprechend den NOx-Konzentrationen und den eingespeisten $H_2O_2$-Mengen geregelt wird.

12. Verfahren nach Anspruch 1, dadurch gekennzeichnet, daß die Stickoxid-Auswaschung in der zweiten Stufe in mindestens zwei Teilstufen durchgeführt wird.

13. Verfahren nach Anspruch 12, dadurch gekennzeichnet, daß $HNO_3$ in die Waschflüssigkeit aller Teilstufen eindosiert wird, wobei die zugegebenen $H_2O_2$-Mengen derart aufgeteilt werden, daß in der letzten Teilstufe eine vorgewählte obere Grenze für die $HNO_3$-Konzentration in der Waschflüssigkeit eingehalten wird.

14. Verfahren nach Anspruch 1, dadurch gekennzeichnet, daß die Waschflüssigkeit der dritten Stufe in einem Kühler gekühlt wird.

15. Verfahren nach Anspruch 14, dadurch gekennzeichnet, daß die Kühlleistung in der dritten Stufe in Abhängigkeit von der zulässigen Höchstkozentration an $HNO_3$ in den gereinigten Rauchgas geregelt wird.

16. Verfahren nach Anspruch 1, dadurch gekennzeichnet, daß die überschüssige $HNO_3$ als Waschflüssigkeit einem den Verfahren vorgelagerten Prozeß der Rauchgasreinigung zugeführt wird.

17. Verfahren nach Anspruch 16, dadurch gekennzeichnet, daß die Schadstoff-beladene Abschlämmung aus der ersten Stufe und der Überschuß an verdünnter $HNO_3$ aus der dritten Stufe in den Quench einer vorgeschalteten Wäsche geführt werden und daß die $HNO_3$ aus der zweiten Stufe als Wertstoff aus der Anlage abgezogen wird.

## Claims

1. Process for removing nitrogen oxides (NOx) from flue gases with low NOx content by a multi-stage washing process with nitric acid ($HNO_3$) solution, with addition of hydrogen peroxide ($H_2O_2$ where the flue gases have previously been freed from $H_2O_2$-decomposing and/or corrosive harmful substances, such for example as sulphur dioxide ($SO_2$), hydrogen chloride (HCl) or hydrogen fluoride (HF) and from solid particles, where for the at least partial oxidation of nitrogen monoxide (NO) into nitrogen dioxide ($NO_2$) the flue gases are treated in a first stage with $HNO_3$ vapour, while in a second stage $NO_2$ and/or an $NO/NO_2$ mixture out of the first stage are washed out with aqueous $HNO_3$ with addition of $H_2O_2$, characterised in that for the avoidance of $H_2O$ condensation out of the flue gas, heat is fed to the first stage 10, in that in the case of higher NOx contents in the flue gas, in the second stage 15, 17, 18, for the withdrawal of the dilute nitric acid ($HNO_3$) occurring there, this acid is first concentrated up in an absorption process 17 preceding as partial stage, and then drawn off, and in that in a third stage 32, for the avoidance of additional emissions the nitric acid ($HNO_3$) vapour remaining in the flue gas in the second stage is washed out by washing with dilute nitric acid ($HNO_3$).

2. Process according to Claim 1, characterised in that the 1st. stage is made as a washing stage.

3. Process according to Claims 1 to 2, characterised in that a part current of the acid produced in the second stage 15 is conducted into the first stage 10 and vaporised by supply of heat.

4. Process according to Claim 1, characterised in that $HNO_3$ is fed in directly as vapour before or into the first stage.

5. Process according to Claim 4, characterised in that flue gases enriched with $HNO_3$ vapour from the second stage are returned into or before the first stage.

6. Process according to one of Claims 1 to 5, characterised in that a quantity of heat necessary for the at least partial preparation of the necessary $HNO_3$ vapour quantity is fed to the $HNO_3$ solution circulating as washing fluid in the first stage.

7. Process according to claim 1, characterised in that the $HNO_3$ vapour quantity in the first stage is set in dependence upon the NO or NOx concentration in the flue gases to be cleaned.

8. Process according to Claim 7, characterised in that the $HNO_3$ vapour quantity in the first stage is set so that an $NO/NO_2$ mixture in the ratio 1 : 1 is produced in this stage.

9. Process according to Claims 4 and 5, characterised in that the first stage is assembled as a simple retention time section.

10. Process according to one of Claims 1 to 8, characterised in that $H_2O_2$ is already added to the washing fluid in the first stage.

11. Process according to Claim 1, characterised in that the $H_2O_2$ quantities supplied into the second stage are set according to the NOx concentration in the flue gases at the entry of the first and/or the second stage, and further in that the HNO$_3$ concentration in the second stage is regulated by addition of washing fluid from the third stage or of fresh water, according to the NOx concentrations and the fed-in H$_2$O$_2$ quantities.

12. Process according to Claim 1, characterised in that the washing out of nitrogen oxide in the second stage is carried out in at least two partial stages.

13. Process according to Claim 12, characterised in that H$_2$O$_2$ is metered into the washing fluid of all partial stages, the added H$_2$O$_2$ quantities being divided up in such a way that in the final partial stage a pre-selected upper limit for the HNO$_3$ concentration in the washing fluid is maintained.

14. Process according to Claim 1, characterised in that the washing liquid of the third stage is cooled in a cooler.

15. Process according to Claim 14, characterised in that the cooling performance in the third stage is regulated in dependence upon the permissible maximum concentration of HNO$_3$ in the purified flue gas.

16. Process according to Claim 1, characterised in that the excess HNO$_3$ is added as washing fluid to a flue gas purification procedure preceding the process.

17. Process according to Claim 16, characterised in that the elutriate charged with harmful substance, from the first stage, and the excess of dilute HNO$_3$ from the third stage are conducted into the quench of a preceding wash, and in that the HNO$_3$ from the second stage is withdrawn as valuable substance from the installation.

## Revendications

1. Procédé pour éliminer les oxydes d'azote (NOx) de gaz de fumée à faible teneur en NOx par un procédé de lavage en plusieurs étapes par une solution d'acide nitrique (HNO$_3$) en ajoutant du peroxyde d'hydrogéne (H$_2$O$_2$), les gaz de fumée ayant été tout d'abord débarrassés des produits nocifs corrosifs et/ou décomposant H$_2$O$_2$, comme par exemple du dioxyde de soufre (SO$_2$), de l'acide chlorhydrique (HCl) ou de l'acide fluorhydrique (HF), ainsi que des particules solides, les gaz de fumée étant traités dans une première étape par de la vapeur de HNO$_3$ pour oxyder au moins partiellement le monoxyde d'azote (NO) en dioxyde d'azote (NO$_2$), NO$_2$ et/ou un mélange NO/NO$_2$ provenant de la première étape étant lavé par HNO$_3$ aqueux en ajoutant H$_2$O$_2$ dans une seconde étape, caractérisé en ce que, pour éviter la condensation de H$_2$O à partir du gaz de fumée, de la chaleur est apportée à la première étape (10), en ce que, pour des teneurs plus élevées de NOx dans le gaz de fumée, dans la seconde étape (15, 17, 18), pour éliminer l'acide nitrique (HNO$_3$) dilué qui y est créé, celui-ci est tout d'abord concentré dans un processus d'absorption (17) prévu en amont en tant qu'étape partielle, puis éliminé, et en ce que, dans une troisième étape (32), pour éviter des émissions supplémentaires de la vapeur d'acide nitrique (HNO$_3$) demeurant dans le gaz de fumée dans la seconde étape, on lave avec de l'acide nitrique (HNO$_3$) dilué.

2. Procédé selon la revendication 1, caractérisé en ce que la première étape est effectuée en tant qu'étape de lavage.

3. Procédé selon la revendication 1 ou 2, caractérisé en ce qu'un courant partiel de l'acide créé dans la seconde étape (15) est amené dans la première étape (10) et est vaporisé par amenée de chaleur.

4. Procédé selon la revendication 1, caractérisé en ce que HNO$_3$ est introduit directement en tant que vapeur avant ou dans la première étape.

5. Procédé selon la revendication 4, caractérisé en ce que les gaz de fumée enrichis de vapeur de HNO$_3$ provenant de la seconde étape sont ramenés dans ou avant la première étape.

6. Procédé selon une des revendications 1 à 5, caractérisé en ce qu'à la solution de HNO$_3$ circulant en tant que liquide de lavage dans la première étape, est amenée une quantité de chaleur nécessaire pour préparer au moins en partie la quantité de vapeur de HNO$_3$ exigée.

7. Procédé selon la revendication 1, caractérisé en ce que la quantité de vapeur de HNO$_3$ dans la première étape est réglée en fonction de la concentration de NO ou de NOx dans les gaz de fumée à purifier.

8. Procédé selon la revendication 7, caractérisé en ce que la quantité de vapeur de HNO$_3$ dans la première étape est réglée de sorte que, dans cette étape, un mélange de NO/NO$_2$ dans le rapport 1 : 1 soit créé.

9. Procédé selon les revendications 4 et 5, caractérisé en ce que la première étape est conçue comme simple étendue de contact ou de séjour.

10. Procédé selon une des revendications 1 à 8, caractérisé en ce que H$_2$O$_2$ est déjà ajouté dans la première étape au liquide de lavage.

11. Procédé selon la revendication 1, caractérisé en ce que les quantités de H$_2$O$_2$ introduites dans la seconde étape sont réglées de façon correspondant à la concentration de NOx dans les gaz de fumée à l'entrée de la première étape et/ou de la seconde étape, et en ce que, de plus, la concentration de HNO$_3$ dans la seconde étape est réglée par addition du liquide de lavage provenant de la troisième étape ou d'eau fraîche de façon correspondant aux concentrations de NOx et aux quantités de H$_2$O$_2$ introduites.

12. Procédé selon la revendication 1, caractérisé en ce que le lavage des oxydes d'azote dans la seconde étape est effectué en au moins deux étapes partielles.

13. Procédé selon la revendication 12, caractérisé en ce que $H_2O_2$ dans le liquide de lavage de toutes les étapes partielles est dosé, les quantités de $H_2O_2$ ajoutées étant réparties de sorte que, dans la dernière étape partielle, une limite supérieure prédéterminée pour la concentration de $HNO_3$ dans le liquide de lavage soit respectée.

14. Procédé selon la revendication 1, caractérisé en ce que le liquide de lavage de la troisième étape est refroidi dans un dispositif de refroidissement.

15. Procédé selon la revendication 14, caractérisé en ce que la puissance de refroidissement dans la troisième étape est réglée en fonction de la concentration la plus élevée permise en $HNO_3$ dans le gaz de fumée purifié.

16. Procédé selon la revendication 1, caractérisé en ce que $HNO_3$ en excès est amené, en tant que liquide de lavage, à un processus, prévu en amont du procédé, pour la purification du gaz de fumée.

17. Procédé selon la revendication 16, caractérisé en ce que la boue chargée de produits nocifs provenant de la première étape et l'excès de $HNO_3$ dilué provenant de la troisième étape sont amenés dans l'injection d'un dispositif de lavage en amont, et en ce que $HNO_3$ provenant de la seconde étape est évacué de l'installation en tant que matière de valeur.

# Fig.1

T 50 °C

Fig.2

EP 0 365 566 B1

# Fig.3